# NEW EUROPEAN PATENT SPECIFICATION

(11) **EP 2 388 504 B2**
(45) Date of publication and mention of the opposition decision: **18.01.2023**
(45) Mention of the grant of the patent: 11.07.2018
(21) Application number: 11166944.6
(22) Date of filing: 20.05.2011
(51) Int. Cl.: F04B 39/00, F02M 35/10, F16L 55/033, F02M 35/12

(54) **Sound-deadening duct for aeriform fluids and method of manufacturing same**
Schalldämpfendes Rohr und Herstellverfahren
Conduit atténuateur de bruit et sa méthode de fabrication

(30) Priority: 21.05.2010 IT TO20100424
(43) Date of publication of application: 23.11.2011
(73) Proprietor: OFFICINE METALLURGICHE G. CORNAGLIA S.p.A., 10092 Beinasco (IT); Fiat Group Automobiles S.p.A., 10135 Torino (TO) (IT)
(72) Inventor: Cornaglia, Umberto, 10027, MONCALIERI (TO) (IT); Vitagliani, Paolo, 10026, SANTENA (TO) (IT); Villata, Giorgio, 10023, CHIERI (TO) (IT); Esposito, Daniele Valerio, 10135, TORINO (IT)
(74) Representative: Robba, Pierpaolo

(56) References cited:
- EP-A1- 0 399 433
- EP-A1- 0 509 782
- EP-A1- 0 935 057
- EP-A1- 2 017 440
- WO-A1-2008/012620
- FR-A1- 2 745 034
- JP-A- 2000 170 613
- JP-A- 2001 073 894
- JP-A- 2002 106 431
- JP-A- 2008 202 518
- JP-A- 2008 296 664
- JP-B2- 3 844 191
- JP-U- S6 338 615
- US-A- 5 979 013
- US-A1- 2004 134 460
- US-A1- 2004 226 772
- US-A1- 2009 293 832

## Description

### Technical field

The present invention concerns a sound-deadening duct for aeriform fluids and the method of manufacturing same.

More precisely, the invention relates to a sound-deadening duct to be applied to the air suction circuit of internal combustion engines and compressors.

### Prior art

Air suction circuits for internal combustion engines, coated with materials having sound-absorbing properties, are known in the art.

Said coating is intended to absorb acoustic waves propagating through the side wall of the duct, and hence it has a sound-deadening effect.

An example of such a duct is disclosed in JP 2000170613.

Sound-deadening suction ducts are also known, which comprise a composite structure where an internal duct provided with side openings and an external coating of sound-absorbing material are defined. Examples of such ducts are disclosed in JP 2001073894, EP 0 399 433, US 5 979 013.

EP 2 017 440 discloses another example of sound-deadening suction duct for intake circuits of internal combustion engines which comprises a dissipating element having orifices putting the inside of the conduit in communication with the outside.

JP 2008296664 discloses a sound-deadening duct according to the preamble of claim 1.

The problem of how to obtain sound-deadening ducts for air suction, in particular for internal combustion engines, compressors and the like, is at present still of particular interest, along with the need to provide methods of manufacturing such ducts that can be industrially applied at reduced costs.

Thus, it is the main object of the present invention to meet the above need, by providing a sound-deadening duct for aeriform fluids with improved performance in terms of noiseless operation with respect to the prior art, and a method of manufacturing same, which can be industrially applied at favourable costs.

The above and other objects are achieved by the duct and the method of manufacturing same as claimed in the appended claims.

### Description of the invention

The invention is an internal combustion engine or compressor having an air suction circuit comprising a sound-deadening duct for aeriform fluids according to claim 1. Indeed, by such a construction, an increase in the overall volume of the sound-absorbing material adhering to the duct body is obtained, with a consequent increase in the sound-deadening effect thanks to the attenuation of the sound wave propagation along the wall of said duct body.

The technical solution consisting in the provision of a layer of sound-absorbing material penetrating into the channels of the radial openings formed in the duct wall advantageously allows easily defining and changing, during the design phase, the arrangement, the shapes and the sizes of the openings, depending on the duct geometry, in order to obtain the optimum sound-deadening effect.

Always according to the invention, the sound-deadening duct can be advantageously obtained by assembling separate duct portions, previously formed for instance by moulding or blowing plastic materials and equipped with a sound-absorbing coating arranged internally or externally or on both surfaces of the walls of the duct body.

### Brief Description of the Figures

Some preferred embodiments of the invention will be given by way of non limiting examples with reference to the accompanying drawings, in which:
- Fig. 1A is a side view of the duct according to the invention;
- Fig. 1B is a top view of the duct shown in Fig. 1;
- Figs. 2A to 2C are cross-sectional views of the duct, relating to as many embodiments of the invention;
- Fig. 3 shows a step in the method of manufacturing the duct according to the invention.

### Description of a preferred embodiment

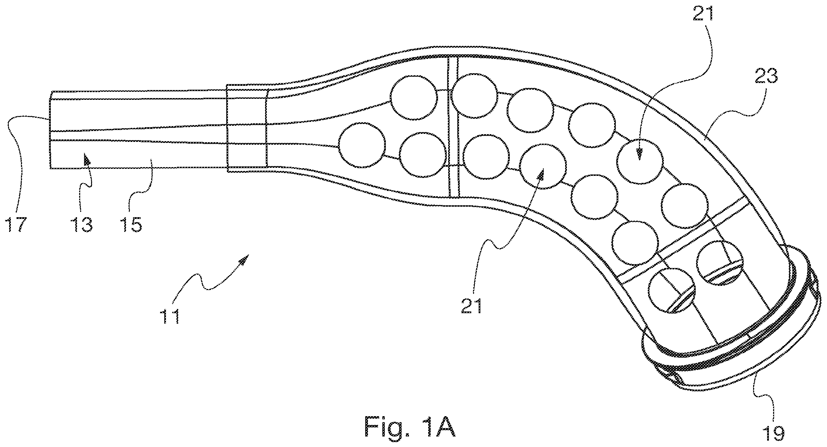

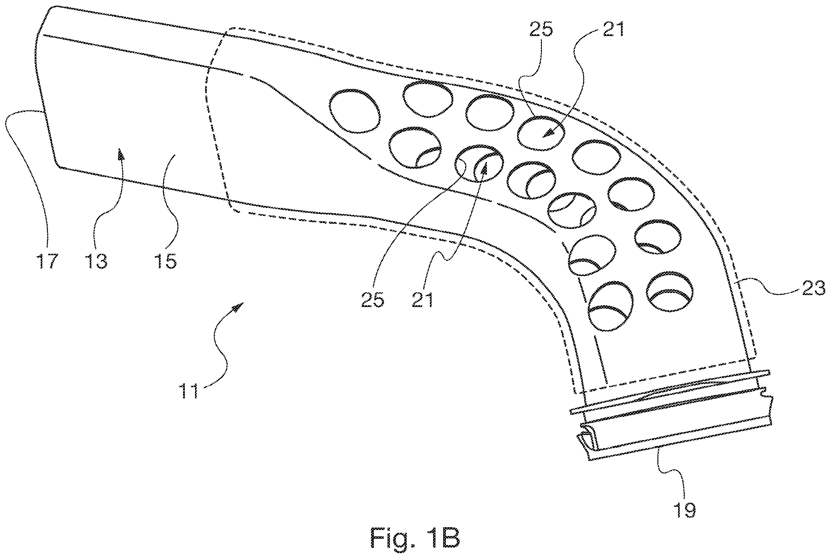

The sound-deadening duct included in the invention has been generally denoted by reference numeral 11 in Figs. 1A and 1B.

Duct 11 comprises a substantially rigid hollow body 13, having a side wall 15 and axially open opposite ends 17, 19.

Hollow body 13 substantially determines the shape of duct 11 and, in the example illustrated, it has a substantially cylindrical shape, with a portion with rectangular cross-section, axially open at 17, and a portion of circular cross-section, axially open at 19.

According to the invention, body 13 could be in the simplest case cylindrical with constant circular cross-section, or it could have a cross section with variable shape and/or size, or yet it could be shaped according to any geometry, for instance with straight and curve portions, and have any cross-section, for instance circular or rectangular or with a circular portion and a rectangular portion, as in the example illustrated.

Said body 13 can moreover be manufactured in monolithic form, i.e. as a single piece, or by assembling a number of parts. More particularly, body 13 could be formed by moulding or blowing plastic materials, or by assembling together, e.g. by welding or gluing or fitting-in, parts of plastic materials formed by moulding or blowing. A suitable plastic material for this purpose is for instance PVC (polyvinylchloride).

According to the invention, wall 15 of body 13 is provided with at least one opening 21 and more preferably with a plurality of openings 21, and the inner or the outer surface or both opposite surfaces of said wall 15 is or are coated with a layer 23 of a material with sound-absorbing properties.

According to a preferred embodiment of the invention, layer 23 is exposed to the external environment, i.e. its face opposite the face turned towards body 13 is in communication with the external environment.

Preferred shapes for openings 21 could be the circular, elliptical or rectangular shape. Openings 21 could be substantially of any size. In case of circular openings, their diameter could be for instance of about 20 mm and they could be distributed with a density of about four openings per 25 cm².

Suitable sound-absorbing materials for manufacturing layer 23 are for instance polyurethane resins with two components, polyol and isocyanate in fluid condition, which components, when combined, become polymerised and originate a stable and irreversible compound. Preferably, use is made of viscoelastic foamed polyurethanes of the kind employed for making sound-absorbing coatings in vehicle parts, such as the coating of the internal side of the engine compartment. Such materials, moreover, are advantageous in that they allow making a coating layer 23 adhering to the surface of wall 15. Moreover, adhesion of layer 23 to the surface of wall 15 is preferably such as to permanently join layer 23 to wall 15, so as substantially to prevent such a layer 23 from becoming detached from said wall 15. Advantageously, thanks to such a feature, layer 23 optimally performs its functions and it does not require means for being fastened to body 13.

Still according to the invention, it is possible that layer 23 is in turn coated with a water-repellent material, for instance a water-repellent film.

Advantageously, according to the invention, said layer 23 of sound-absorbing material covers the inner or the outer surface, or both, of said wall 15, and moreover it penetrates into channel 25 radially defined through the thickness of wall 15 in correspondence of each opening 21, substantially until the plane of the opposite surface of said wall 15.

Channel 25 defined by each radial opening 21 has a length substantially corresponding to the thickness of said wall 15 surrounding the opening.

Typically, the thickness of wall 15 is of the order of the millimetre, for instance in the range 2.0 to 2.5 mm.

Moreover, openings 21 are formed with a set of teeth radially projecting into channel 25, in order to improve resin adhesion.

Moreover, said layer 23 preferably has a thickness in the range 5 to 50 mm, more preferably of about 10 mm.

Always according to the invention, in a preferred embodiment, layer 23 of sound-absorbing material covers most surface of wall 15 of body 13, and preferably at least two thirds of the inner or outer side surface thereof.

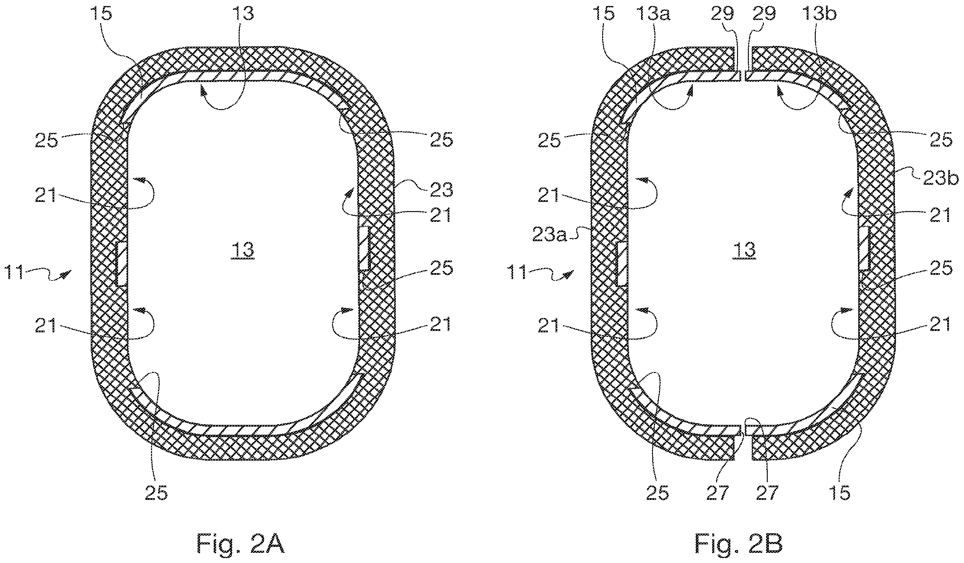

Referring to Fig. 2A, a first embodiment of the invention is shown, in which body 13 is a monolithic body, i.e. it is formed as a single piece, for instance by moulding plastic materials, and is then coated with sound-absorbing material 23 on its outer surface in order to obtain duct 11.

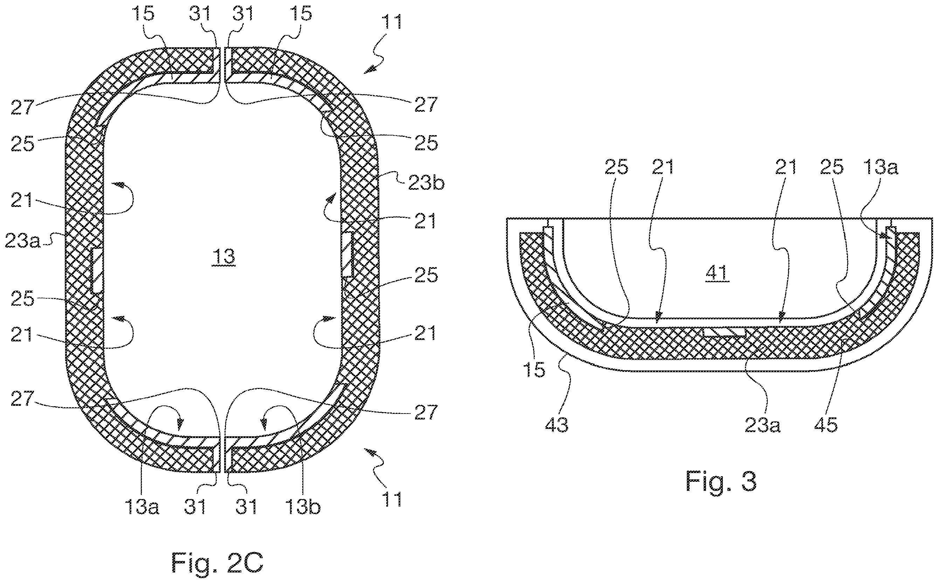

Referring to Figs. 2B and 2C, a second embodiment of the invention is shown, in which body 13 is defined by a pair of half-shells 13a, 13b joined together by welding or gluing along a corresponding longitudinal joining edge 27.

Preferably, according to the invention, both half-shells 13a, 13b have a corresponding layer 23a, 23b of a material with sound-absorbing properties, and both half-shells are provided with one or more openings 21 allowing the sound-absorbing material to penetrate into the corresponding radial channel 25, through wall 15 of body 13, substantially until the plane of the opposite surface of said wall.

According to the invention, openings 21 will preferably be provided on both half-shells 13a, 13b, but according to the invention they could even be provided on only one half-shell, and according to any distribution and shape suitable for reducing sound propagation to the outside of duct 11, once coating layer 23 has been applied. Preferably, the surface of the openings will be as great as possible, consistently with the structural resistance of body 13. For instance, the area of said open surface could be at least one third of the area of the overall surface of the portion of wall 15 on which openings 21 are provided, and preferably such a result will be obtained by means of a high density of openings 21 of limited diameter, in order to avoid structure sags. In this manner, an advantageous increase in the overall volume of the sound-absorbing material covering body 13 is obtained, without excessively weakening the structure.

Referring in particular to Fig. 2B, the second embodiment is shown in a first variant in which layer 23 of sound-absorbing material covering each half-shell 13a, 13b is arranged on the outer surface of wall 15 of each half-shell, in such a manner that a longitudinal joining portion 29 along the outer surface of said wall 15, adjacent to the corresponding joining edge 27, lacks coating layer 23a, 23b.

This feature is particularly advantageous for allowing joining together, e.g. by welding, half-shells 13a, 13b previously provided with coating 23a, 23b of sound-absorbing material. Indeed, joining portion 29 without coating prevents heat developed during welding or the chemical action of adhesives, if any, from causing melting or anyway deterioration of the material of coating 23a, 23b near joining edge 27.

Moreover, thanks to the shrinking, during welding, of the material of joining portion 29 without coating, coating layers 23a, 23b of both half-shells will be substantially mutually in contact, once both half-shells have been joined together, thereby causing portion 29 to disappear at least partly and making final duct 11 substantially monolithic.

Should this not occur, it is also possible to seal the area left without sound-absorbing material for instance by means of a suitable resin or "hot-melt" adhesive or another suitable substance, which could be for instance dispersed in fluid condition in the area to be sealed and then allowed to harden.

Referring now to Fig. 2C, said second embodiment is shown in a second variant in which body 13 is defined by a pair of half-shells 13a, 13b, each comprising a joining shoulder 31 that is radially bent outwards in L shape relative to wall 15 and longitudinally extends along both joining edges 27 of each half-shell. A corresponding layer 23a, 23b of sound-absorbing material covers both half-shells 13a, 13b and ends at said L-shaped edges, which therefore define containment edges for the sound-absorbing material of layer 23. The thickness of layer 23 is preferably lower than or equal to the radial extension of edge 31 with respect to the outer surface of wall 15 on which layer 23 is applied.

Referring to Fig. 3, there is shown the step of obtaining layer 23 of sound-absorbing material coating body 13 or one of half-shells 13a, 13b, before the latter are joined together in order to form body 13.

Half-shell 13a has been considered by way of example in Fig. 3; yet, according to the invention, the same method can be used for the other half-shell 13b or the whole body 13, when the latter is monolithically formed.

Half-shell 13a is placed between a pair of moulds 41, 43, an inner and an outer mould, respectively, with reference to the half-shell curvature. In the example illustrated, internal mould 41 substantially adheres to the inner surface of wall 15, whereas external mould is slightly spaced apart from the outer surface of wall 15 and defines a hollow space 45 between wall 15 and mould 43. Said hollow space 45 is intended to define a chamber for receiving the sound-absorbing material being injected, which will adhere to the outer surface of wall 15 and will penetrate through openings 21 into the corresponding channels 25, until internal mould 41.

Of course, still according to the invention, in combination with or in the alternative to external hollow space 45, a corresponding hollow space could be defined internally of wall 15 and the sound-absorbing material could be injected into said internal space in order to obtain a coating internally of body 13.

According to the invention, duct 11 is preferably obtained by joining together at least two half-shells, each previously provided with a sound-absorbing coating layer. This solution makes the process of injection of the sound-absorbing material easier. In case of monolithic bodies, especially in case of non-rectilinear bodies, it would actually be complex or impossible to make moulds and counter-moulds suitable for preventing the injected material from coming out through openings 21 and spreading beyond the plane of the surface of the opposite wall of body 13.

Always according to the invention, it is also possible to provide for the sound-absorbing material penetrating only into one or a few openings 21 out of a set of openings provided in body 13. This result may be obtained for instance by means of a mould equipped with plugs penetrating over a length corresponding to the thickness of wall 15 into channels 25 of openings 21 that are not to be filled.

Other embodiments could use fit-in joining means for keeping together both half-shells 13a, 13b and/or the other parts forming body 13 of duct 11. As belonging to the field of internal combustion engines and compressors, the duct included in the invention may be advantageously used both upstream and downstream the filter box generally provided in order to filter air entering the motor or the compressor. In such applications, therefore, the duct included in the invention can be used to form the whole or part of both the circuit section sucking the so-called "dirty" air, i.e. the section upstream the filter box, and the section sucking the so-called "clean" air, i.e. the section downstream the filter box. In the latter case, however, the need to avoid entry of dust or water or other materials through the duct wall and the higher depression to which the layer of sound-absorbing material is subjected in correspondence of the openings in the duct wall are to be taken into account.

## Claims

1. Internal combustion engine or compressor having an air suction circuit comprising a sound-deadening duct for aeriform fluids (11), said duct comprising a hollow body (13) wherein a side wall (15) and axial end openings (17, 19), for the inlet and outlet of air respectively, are defined, said side wall of said hollow body being provided with at least one radial opening (21) defining a corresponding channel (25) extending through said wall and being at least partially coated with a layer (23) of sound-absorbing material, for instance a polyurethane resin, that adheres to the surface of the side wall (15) and at least partially penetrates into the channel defined by said at least one radial opening, **characterized in that** said at least one radial opening (21) is formed with a set of teeth radially projecting into said channel (25), in order to improve resin adhesion.

2. Engine or compressor according to claim 1, wherein said hollow body (13) comprises a plurality of radial openings (21) variously arranged on the surface of said side wall (15) and wherein the layer (23) of sound-absorbing material covers said openings and penetrates into the corresponding channels (25) defined by the openings.

3. Engine or compressor according to claim 1 or 2, wherein the layer (23) of sound-absorbing material coats at least partially: the outer surface or the inner surface or both the inner surface and the outer surface of said side wall (15).

4. Engine or compressor according to any of the preceding claims, wherein the channel (25) defined by said at least one radial opening (21) has a length essentially equal to the thickness of said wall (15) surrounding the opening.

5. Engine or compressor according to any of the preceding claims, wherein the layer (23) includes a coating of water-repellent material.

6. Engine or compressor according to any of the preceding claims, wherein the coating layer (23) adheres to the surface of the wall (15) of the hollow body (13) so as substantially to prevent said layer (23) from being detached from said wall (15).

7. Method for obtaining an internal combustion engine or compressor having an air suction circuit comprising a sound-deadening duct for aeriform fluids (11) according to claim 1, said method comprising the steps of:
- forming at least one portion (13a, 13b) of a hollow body (13) wherein a side wall (15) and axial end openings (17, 19), for the inlet and outlet of air respectively, are defined and wherein the side wall is provided with at least one radial opening (21) defining a corresponding channel (25) that extends through said wall;
- coating at least partially said at least one portion of hollow body with a layer of sound-absorbing material (23), for instance a polyurethane resin, so that the coating layer adheres to the surface of the side wall (15) and at least partially penetrates into the channel defined by said at least one radial opening;
- in case, joining together hollow body portions provided with the coating layer (23) so as to obtain said duct (11):
**characterized in that** said step of forming at least one portion (13a, 13b) of a hollow body (13) includes the step of forming said at least one radial opening (21) with a set of teeth radially projecting into said channel (25), in order to improve resin adhesion.

8. Method according to claim 7, wherein said at least one portion (13a, 13b) of hollow body comprises a hollow monolithic body provided with open axial ends and with at least one radial opening.

9. Method according to claim 8, wherein said at least one portion of hollow body comprises a half-shell (13a, 13b) provided with joining edges (27) for joining the half-shell with a corresponding half-shell and wherein there is defined a joining portion (29) having no sound-absorbing material over the surface of said wall (15) and being adjacent to the joining edge (27).

10. Method according to claim 8, wherein said at least one portion of hollow body comprises a half-shell (13a, 13b) provided with joining edges (27) for joining the half-shell with a corresponding half-shell and wherein there is defined a joining portion provided with a shoulder (31) that is "L"-bent radially towards the outside of the wall (15) and extends longitudinally along both joining edges (27) of each half-shell.

11. Method according to any of claims from 7 to 10, wherein said step of coating at least partially said at least one portion of hollow body with a layer of sound-absorbing material (23) is performed by injecting fluid polyurethane resin.

12. Method according to any of claims from 7 to 11, including a step of coating the layer (23) with a water-repellent material.

13. Method according to any of claims from 7 to 12, wherein said step of coating at least partially said at least one portion of hollow body with a layer of sound-absorbing material (23) is performed so that the coating layer adheres to the surface of the wall (15) of the hollow body (13) in such a manner as to substantially prevent said layer (23) from being detached from said wall (15).

## Patentansprüche

1. Verbrennungsmotor oder Kompressor mit einer Luftansaugstrecke, die einen schallschluckenden Kanal für gasförmige Fluide (11) enthält, wobei der Kanal einen Hohlkörper (13) aufweist, in dem eine Seitenwand (15) und zwei axiale Endöffnungen (17,19) für den Einlass beziehungsweise Auslass von Luft gebildet sind, wobei die Seitenwand des Hohlkörpers mit wenigstens einer radialen Öffnung (21) versehen ist, die einen entsprechenden Kanal (25) bildet, der sich durch die Wand hindurch erstreckt und wenigstens teilweise mit einer Schicht (23) schallschluckendem Material, beispielsweise einem Polyurethan-Harz überzogen ist, das an der Oberfläche der Seitenwand (15) haftet und sich zumindest zum Teil in den durch die wenigstens eine radiale Öffnung gebildeten Kanal hinein erstreckt, **dadurch gekennzeichnet, dass** die wenigstens eine radiale Öffnung (21) mit einem Satz von Zähnen gebildet ist, die in den Kanal (25) hinein ragen, um die Haftung des Harzes zu verbessern.

2. Motor oder Kompressor nach Anspruch 1, wobei der Hohlkörper (13) mehrere radiale Öffnungen (21) aufweist, die unterschiedlich auf der Oberfläche der Seitenwand (15) verteilt sind, und wobei die Schicht (23) schallschluckendem Materials die Öffnungen bedeckt und in die entsprechenden Kanäle (25), die durch die Öffnungen gebildet sind, eindringt.

3. Motor oder Kompressor nach Anspruch 1 oder 2, wobei die Schicht (23) aus schallschluckendem Material zumindest teilweise bedeckt: die Außenfläche oder die Innenfläche oder sowohl die Innenfläche als auch die Außenfläche der Seitenwand (15).

4. Motor oder Kompressor nach einem der vorstehenden Ansprüche, wobei der Kanal (25), der durch die wenigstens eine radiale Öffnung (21) gebildet ist, eine Länge hat, die im Wesentlichen der Dicke der Wand (15) entspricht, welche die Öffnung umgebt.

5. Motor oder Kompressor nach einem der vorstehenden Ansprüche, wobei die Schicht (23) eine Beschichtung aus wasserabweisendem Material aufweist.

6. Motor oder Kompressor nach einem der vorstehenden Ansprüche, wobei die Schicht (23) an der Oberfläche der Wand (15) des Hohlkörpers (13) haftet, sodass im Wesentlichen eine Ablösung der Schicht (23) von der Wand (15) verhindert wird.

7. Verfahren zum Erhalten eines Verbrennungsmotors oder Kompressors mit einer Luftansaugstrecke, die einen schallschluckenden Kanal für gasförmige Fluide (11) gemäß Anspruch 1 enthält, wobei das Verfahren die folgenden Schritte enthält:
- Bilden wenigstens eines Teils (13a, 13b) eines Hohlkörpers (13), in dem eine Seitenwand (15) und zwei axiale Endöffnungen (17, 19) für den Einlass beziehungsweise Auslass von Luft gebildet sind, wobei die Seitenwand mit wenigstens einer radialen Öffnung (21) versehen ist, die einen entsprechenden Kanal (25) bildet, der sich durch die Wand hindurch erstreckt;
- Beschichten des wenigstens einen Teils des Hohlkörpers zumindest teilweise mit einer Schicht schallschluckendem Material (23), beispielsweise einem PolyurethanHarz, sodass die Beschichtung an der Oberfläche der Seitenwand (15) haftet und sich zumindest teilweise in den Kanal hineinerstreckt, der durch die wenigstens eine radial Öffnung gebildet ist;
- gegebenenfalls Verbinden von Hohlkörperteilen, die mit der Schicht (23) versehen sind, um so den Kanal (11) zu schaffen,
**dadurch gekennzeichnet, dass** der Schritt des Bildens des wenigstens einen Teils (13a, 13b) des Hohlkörpers (13) den Schritt des Bildens der wenigstens einen radialen Öffnung (21) mit wenigstens einem Satz von Zähnen, die radial in den Kanal (25) hineinragen, um die Haftung des Harzes zu verbessern, enthält.

8. Verfahren nach Anspruch 7, wobei der wenigstens eine Teil (13a, 13b) des Hohlkörpers einen hohlen monolithischen Körper aufweist, der mit offenen axialen Enden und mit wenigstens einer radialen Öffnung versehen ist.

9. Verfahren nach Anspruch 8, wobei der wenigstens eine Teil des Hohlkörpers eine Halbschale (13a, 13b) aufweist, die mit Verbindungsrändern (27) zum Verbinden der Halbschale mit einer entsprechenden Halbschale versehen ist, wobei ein Verbindungsabschnitt (29) gebildet ist, der kein schallschluckendes Material auf der Oberfläche der Wand (15) aufweist und an den Verbindungsrand (27) angrenzt.

10. Verfahren nach Anspruch 8, wobei der wenigstens eine Abschnitt des Hohlkörpers eine Halbschale (13a, 13b) aufweist, die mit Verbindungsrändern (27) zum Verbinden der Halbschale mit einer entsprechenden Halbschale versehen ist, und wobei ein Verbindungsabschnitt mit einer Schulter (31) versehen ist, die "L-förmig" radial hin zu der Wand gebogen ist und sich in Längsrichtung entlang der beiden Verbindungsränder (27) von jeder Halbschale erstreckt.

11. Verfahren nach einem der Ansprüche 7 bis 10, wobei der Schritt des Beschichtens des wenigstens einen Teils des Hohlkörpers zumindest teilweise mit einer Schicht aus schallschluckendem Material (23) durch Einspritzen von flüssigem Polyurethanharz vorgenommen wird.

12. Verfahren nach einem der Ansprüche 7 bis 11 mit einem Schritt des Beschichtens der Schicht (23) mit wasserabweisendem Material.

13. Verfahren nach einem der Ansprüche 7 bis 12, wobei der Schritt des Beschichtens des wenigstens einen Teils des Hohlkörpers zumindest teilweise mit einer Schicht aus schallschluckendem Material (23) so durchgeführt wird, dass die Beschichtung an der Oberfläche der Wand (15) des Hohlkörpers (13) in solcher Weise haftet, dass ein Ablösen der Schicht (23) von der Wand (15) im Wesentlichen verhindert ist.

## Revendications

1. Moteur à combustion interne ou compresseur ayant un circuit d'aspiration d'air comprenant un conduit d'atténuation acoustique pour des fluides aériformes (11), ledit conduit comprenant un corps creux (13) dans lequel une paroi latérale (15) et des ouvertures d'extrémité axiale (17, 19), respectivement pour l'entrée et la sortie d'air, sont définies, ladite paroi latérale dudit corps creux étant pourvue d'au moins une ouverture radiale (21) définissant un canal (25) correspondant s'étendant à travers ladite paroi, et étant au moins partiellement revêtue d'une couche (23) de matériau d'absorption acoustique, par exemple une résine polyuréthane, qui adhère à la surface de la paroi latérale (15) et pénètre au moins partiellement dans le canal défini par ladite au moins une ouverture radiale, **caractérisé en ce que** ladite au moins une ouverture radiale (21) est formée avec un ensemble de dents saillant radialement dans ledit canal (25), afin d'améliorer l'adhérence de résine.

2. Moteur ou compresseur selon la revendication 1, dans lequel ledit corps creux (13) comprend une pluralité d'ouvertures radiales (21) agencées de diverses façons sur la surface de ladite paroi latérale (15) et dans lequel la couche (23) de matériau d'adsorption acoustique couvre lesdites ouvertures et pénètre dans les canaux (25) correspondants définis par les ouvertures.

3. Moteur ou compresseur selon la revendication 1 ou 2, dans lequel la couche (23) de matériau d'absorption acoustique revêt au moins partiellement : la surface externe ou la surface interne ou à la fois la surface interne et la surface externe de ladite paroi latérale (15).

4. Moteur ou compresseur selon l'une quelconque des revendications précédentes, dans lequel le canal (25) défini par ladite au moins une ouverture radiale (21) a une longueur essentiellement égale à l'épaisseur de ladite paroi (15) entourant l'ouverture.

5. Moteur ou compresseur selon l'une quelconque des revendications précédentes, dans lequel la couche (23) comporte un revêtement de matériau hydrofuge.

6. Moteur ou compresseur selon l'une quelconque des revendications précédentes, dans lequel la couche de revêtement (23) adhère à la surface de la paroi (15) du corps creux (13) de façon à empêcher sensiblement ladite couche (23) de se détacher de ladite paroi (15).

7. Procédé d'obtention d'un moteur à combustion interne ou d'un compresseur ayant un circuit d'aspiration d'air comprenant un conduit d'atténuation acoustique pour des fluides aériformes (11) selon la revendication 1, ledit procédé comprenant les étapes de :
- formation d'au moins une portion (13a, 13b) d'un corps creux (13) dans lequel une paroi latérale (15) et des ouvertures d'extrémité axiale (17, 19), respectivement pour l'entrée et la sortie d'air, sont définies et dans lequel la paroi latérale est pourvue d'au moins une ouverture radiale (21) définissant un canal (25) correspondant qui s'étend à travers ladite paroi ;
- revêtement au moins partiel de ladite au moins une portion de corps creux d'une couche de matériau d'absorption acoustique (23), par exemple une résine polyuréthane, de sorte que la couche de revêtement adhère à la surface de la paroi latérale (15) et pénètre au moins partiellement dans le canal défini par ladite au moins une ouverture radiale ;
- éventuellement, jonction ensemble de portions de corps creux pourvues de la couche de revêtement (23) de façon à obtenir ledit conduit (11) ;
**caractérisé en ce que** ladite étape de formation d'au moins une portion (13a, 13b) d'un corps creux (13) comporte l'étape de formation de ladite au moins une ouverture radiale (21) avec un ensemble de dents saillant radialement dans ledit canal (25), afin d'améliorer l'adhérence de résine.

8. Procédé selon la revendication 7, dans lequel ladite au moins une portion (13a, 13b) de corps creux comprend un corps monolithique creux pourvu d'extrémités axiales ouvertes et d'au moins une ouverture radiale.

9. Procédé selon la revendication 8, dans lequel ladite au moins une portion de corps creux comprend une demi-coque (13a, 13b) pourvue de bords de jonction (27) pour joindre la demi-coque à une demi-coque correspondante et dans lequel est définie une portion de jonction (29) dépourvue de matériau d'absorption acoustique sur la surface de ladite paroi (15) et qui est adjacente au bord de jonction (27).

10. Procédé selon la revendication 8, dans lequel ladite au moins une portion de corps creux comprend une demi-coque (13a, 13b) pourvue de bords de jonction (27) pour joindre la demi-coque à une demi-coque correspondante et dans lequel est définie une portion de jonction pourvue d'un épaulement (31) qui est courbé en « L » radialement vers l'extérieur de la paroi (15) et s'étend longitudinalement le long des deux bords de jonction (27) de chaque demi-coque.

11. Procédé selon l'une quelconque des revendications 7 à 10, dans lequel ladite étape de revêtement au moins partiel de ladite au moins une portion de corps creux d'une couche de matériau d'absorption acoustique (23) est effectuée par injection de résine polyuréthane fluide.

12. Procédé selon l'une quelconque des revendications 7 à 11, comportant une étape de revêtement de la couche (23) d'un matériau hydrofuge.

13. Procédé selon l'une quelconque des revendications 7 à 12, dans lequel ladite étape de revêtement au moins partiel de ladite au moins une portion de corps creux d'une couche de matériau d'absorption acoustique (23) est effectuée de sorte que la couche de revêtement adhère à la surface de la paroi (15) du corps creux (13) de manière à empêcher sensiblement ladite couche (23) de se détacher de ladite paroi (15).
